# EUROPÄISCHE PATENTSCHRIFT

(11) **EP 2 603 372 B1**
(45) Veröffentlichungstag und Bekanntmachung des Hinweises auf die Patenterteilung: **16.07.2014**
(21) Anmeldenummer: 11727650.1
(22) Anmeldetag: 22.06.2011
(51) Int. Cl.: B29C 69/00, B29C 51/26, B29C 33/30, B29C 51/10, B29C 51/12, B29C 49/22, B29C 49/04

(54) **BLASFORMWERKZEUG SOWIE VERFAHREN ZUR HERSTELLUNG EXTRUSIONSBLASGEFORMTER KUNSTSTOFFARTIKEL**
BLOW MOLDING TOOL AND METHOD FOR PRODUCING EXTRUSION BLOW-MOLDED PLASTIC ARTICLES
MOULE DE SOUFFLAGE ET PROCÉDÉ DE FABRICATION D'ARTICLES EN PLASTIQUE MOULÉ PAR EXTRUSION-SOUFFLAGE

(30) Priorität: 09.07.2010 DE 102010026716
(43) Veröffentlichungstag der Anmeldung: 19.06.2013
(73) Patentinhaber: Kautex Textron GmbH & Co. KG, 53229 Bonn (DE)
(72) Erfinder: BIENHÜLS, Deniz, 53604 Hennef (DE); BORCHERT, Matthias, 53179 Bonn (DE); BUCHHOLZ, Thomas, 51469 Bergisch Gladbach (DE); ELSASSER, Carsten, 50259 Pulheim (DE); FREY, Steffen, 53721 Siegburg (DE); HILD, Jochen, 53229 Bonn (DE); MEHREN, Christoph, 53639 Königswinter (DE); SCHMITZ, Marcus, 53721 Siegburg (DE)
(74) Vertreter: Kierdorf Ritschel
(86) Internationale Anmeldenummer: PCT/EP2011/003080
(87) Internationale Veröffentlichungsnummer: WO 2012/003929

(56) Entgegenhaltungen:
- DE-A1-102006 027 256
- GB-A- 1 205 783
- GB-A- 1 410 215
- JP-A- 6 099 474
- JP-A- 61 134 226
- US-A- 1 441 603
- US-A- 5 935 620

## Beschreibung

Die Erfindung betrifft ein Blasformwerkzeug zur Herstellung eines Kunststoffartikels.

Die Erfindung betrifft insbesondere ein Blasformwerkzeug zur Herstellung eines Kraftstoffbehälters aus thermoplastischem Kunststoff sowie ein Verfahren zur Herstellung eines Kraftstoffbehälters unter Verwendung eines solchen Blasformwerkzeugs.

In Kraftstoffbehältern aus Kunststoff werden üblicherweise Einbauteile, wie Kraftstoffpumpen, Füllstandsgeber, Be- und Entlüftungsventile, Schwalleinbauten und dergleichen vorgesehen. Kraftstoffbehälter aus thermoplastischem Kunststoff werden vorwiegend aus Polyethylen hergestellt. Polyethylen ist gegen Kohlenwasserstoffe nicht vollständig diffusionsbeständig, weswegen es erforderlich ist, besondere Maßnahmen zu treffen, die sicherstellen, dass Kunststoff-Kraftstoffbehälter weitestgehend permeationsdicht für Kohlenwasserstoffe sind. Dies erfolgt entweder durch Fluorieren oder Sulfonieren, oder die Permeationsdichtigkeit wird weitestgehend dadurch sichergestellt, dass die Behälterwandung aus einem Co-Extrudat aus mehrschichtigem Kunststoff auf der Basis von HDPE gefertigt wird, wobei das Co-Extrudat eine Innenschicht aus einem Barrierematerial, beispielsweise EVOH, umfasst. Zur Befestigung der zuvor erwähnten Einbauteile im Innern des Kraftstoffbehälters ist es bisweilen erforderlich, Öffnungen bzw. Durchbrüche in der Behälterwandung vorzusehen. Im Sinne einer hohen Permeationsdichtigkeit des Systems "Kraftstoffbehälter" ist es wünschenswert, die Behälterwandung möglichst nicht zu verletzen, bzw. nur so viele Durchbrüche in der Behälterwandung vorzusehen, wie es für die Herstellung der benötigten Schnittstellen mit dem Kraftfahrzeug in der Einbausituation unbedingt erforderlich ist. Aus diesem Grund werden zunehmend Kraftstoffbehälter aus thermoplastischem Kunststoff bereits während deren Ausformung, bzw. während der Herstellung, durch Extrusionsblasformen mit Einbauteilen bestückt. Die Einbauteile werden bereits beim Extrusionsblasformen an die noch schmelzeheiße Behälterwandung gefügt.

Die hierfür benötigten Werkzeuge sind verhältnismäßig aufwändig, insbesondere wenn das sog. "Twin Sheet Blow Molding-Verfahren" Anwendung findet, welches die Verwendung dreiteiliger Werkzeuge, umfassend zwei Blasformhälften und einen Mittenrahmen oder Kern erfordert. Auch der Mittenrahmen bzw. der Kern muss in Werkzeugqualität ausgeführt sein, so dass insgesamt die Investitionskosten für ein solches Werkzeug beachtlich sind, insbesondere wenn räumlich komplex gestaltete Kraftstoffbehälter ausgeformt werden sollen, die einen verhältnismäßig komplizierten dreidimensionalen Verlauf der Behälternaht aufweisen.

Ein Blasformwerkzeug gemäß Oberbegriff von Anspruch 1 ist beispielsweise aus dem Dokument US 5,935,620 bekannt, wobei dieses Blasformwerkzeug nach einer Variante als sogenanntes Mehrkavitätenwerkzeug mit mehreren Formeinsätzen ausgebildet ist, um aus einem schlauchförmigen Vorformling mehrere Erzeugnisse, beispielsweise in Form von Flaschen, mit einem Blasformzyklus herstellen zu können.

Aus dem Dokument US 1,441,603 A ist ein mehrteiliges Tiefziehwerkzeug zur Herstellung von Hohlkörpern aus plattenförmigem Halbzeug bekannt.

Aus der JP 06099474 A ist ein Blasformwerkzeug mit Formaufspannplatten und auf diesen auswechselbar angebrachten Blasformhälften bekannt.

Ein Extrusionsblasformverfahren mit einem dreiteiligen Werkzeug umfassend ein Mittenwerkzeug zur Herstellung eines Bauteils mit kalibriertem Innendurchmesser ist beispielsweise aus der JP 61134226 A bekannt.

Aus der GB 1205783 ist ein Blasformverfahren bekannt, bei welchem ein Vorformling zwischen zwei relativ zueinander bewegbare äußere Formhälften eines Blasformwerkzeugs verbracht wird, dass auch zwei relativ zueinander bewegbare innere Werkzeuge umfasst, um den Hohlkörper auszubilden. Dabei werden zunächst die äußeren Formhälften geschlossen, der Vorformling wird innerhalb dieser aufgeweitet, die inneren Teile des Werkzeuges in Form von Schiebern werden sodann zusammengefahren, um so Teile des Vorformlings bereichsweise miteinander zu verschweißen.

Ziel der Erfindung ist es deshalb, ein Blasformwerkzeug bereitzustellen, welches einen grundsätzlich einfacheren Aufbau aufweist.

Weiterhin ist es Aufgabe der Erfindung, ein entsprechend vereinfachtes Verfahren zur Herstellung extrusionsblasgeformter Kunststoffartikel, insbesondere zur Herstellung von Kraftstoffbehältern aus thermoplastischem Kunststoff, bereitzustellen.

Die Aufgabe wird zunächst gelöst durch ein Blasformwerkzeug zur Herstellung eines Kunststoffartikels, umfassend wenigstens ein Schließgestell mit Formaufspanneinrichtungen, wenigstens zwei Blasformhälften, die über eine Öffnungs- und Schließbewegung des Schließgestells aufeinander zu und voneinander weg verfahrbar ausgebildet sind, und die jeweils wenigstens eine Kavität zur Ausformung des Kunststoffartikels aufweisen, wobei die Formaufspanneinrichtungen jeweils wenigstens einen Werkzeughalter aufweisen, in welchen jeweils wenigstens ein Formeinsatz auswechselbar eingesetzt ist, und dass die Werkzeughalter jeweils einen umlaufenden Dichtrand bilden und wobei wenigstens ein Mittenwerkzeug vorgesehen ist, welches quer zu der Öffnung- und Schließbewegung der Blasformhälften verfahrbar ist und welches mit den Dichträndern der Werkzeughalter abdichtend in Anlage bringbar ist, wodurch ein Ausformen von wenigstens zwei Zwischenerzeugnissen in Form von Schalen möglich ist und wobei die Formeinsätze über entsprechende Schließkanten/Quetschkanten verfügen, die ein Verschweißen der Schalen miteinander zu einem fertigen Hohlkörper bei einem weiteren Schließen der Werkzeuge ermöglichen.

Das Blasformwerkzeug gemäß der Erfindung besitzt den Vorzug, dass die zur Bereitstellung der Kavitäten verwendeten Werkzeuge wesentlich einfacher ausgebildet sein können als bei einem Blasformwerkzeug nach dem Stand der Technik. Erfindungsgemäß ist vorgesehen, die Abdichtung der Kavität des Werkzeugs über die Werkzeughalter und nicht mehr über das Werkzeug selbst zu bewerkstelligen, so dass bei Änderung des Werkzeugs oder Umstellung des Blasformwerkzeugs auf einen anderen Artikel lediglich die Formeneinsätze ausgetauscht werden müssen. Darüber hinaus ist es insbesondere für eine Vorserienproduktion oder Kleinserienproduktion besonders vorteilhaft, dass bei dem Blasformwerkzeug gemäß der Erfindung auswechselbare Formeneinsätze als preiswerte Versuchswerkzeuge mit kürzeren Vorlaufzeiten einsetzbar sind. Die Werkzeughalter können standardisiert sein, eine Abdichtung der Kavität erfolgt über die standardisierten Werkzeughalter. Bei einer bevorzugten Variante des Blasformwerkzeugs gemäß der Erfindung ist vorgesehen, dass die Dichtränder der Werkzeughalter sich ausschließlich in einer zu der Schließbewegung senkrechten Ebene erstreckt, so dass der durch den Werkzeughalter definierte Verlauf der Teilungsebene des Werkzeugs im Wesentlichen zweidimensional ist.

Die Erfindung kann dahingehend zusammengefasst werden, dass das Werkzeug gemäß der Erfindung so ausgebildet ist, dass eine Abdichtung der Kavität der Werkzeuge bei einem anfänglichen oder ersten Schließen der Werkzeuge über die Dichtränder der Werkzeughalter in einer Ebene, d. h. zweidimensional, erfolgt. Das Verschweißen der Schalen miteinander zu einem fertigen Hohlkörper in einem weiteren Verfahrensschritt bei einem weiteren Schließen der Werkzeuge kann über entsprechend ausgebildete Schließkanten/Quetschkanten der Formeinsätze erfolgen.

Insbesondere, wenn sich die Dichtränder der Werkzeughalter in einer zur Schließbewegung senkrechten Ebene (zweidimensional) erstrecken, kann das Mittenwerkzeug entsprechend einfach ausgestaltet sein. Das Mittenwerkzeug kann hierzu wenigstens zwei sich jeweils in einer Ebene erstreckende umlaufende Dichtränder aufweisen, die mit den Dichträndern der Werkzeughalter zusammenwirken.

Im einfachsten Fall kann das Mittenwerkzeug als kastenförmiger Rahmen ausgebildet sein, welcher wenigstens einen Komponententräger umfasst. Dieser Komponententräger kann beispielsweise als artikelspezifische Komponenten-Aufspannplatte ausgebildet sein, auf welcher beispielsweise Fügeeinheiten für das Einbringen von Einbauteilen in den zu fertigenden Kraftstoffbehälter vorgesehen sein können.

Bevorzugt weisen die Werkzeughalter jeweils eine umlaufende elastische Dichtung auf.

Dies hat insbesondere Vorzüge bei Anwendung eines Extrusionsblasformverfahrens, bei welchem bahnförmige bzw. lappenförmige Vorformlinge in einem ersten Verfahrensschritt in den Blasformhälften ausgeformt werden, und diese in einem nachfolgenden Verfahrensschritt miteinander zu dem fertigen Hohlkörper verschweißt werden. In diesem Falle wird die Kavität des Blasformwerkzeugs zunächst einmal durch Anlegen der Dichtränder der Werkzeughalter gegen die Dichtränder des Mittenwerkzeugs abgedichtet. Dies ist grundsätzlich auch ohne elastische Dichtmittel möglich, jedoch bietet die Verwendung einer umlaufenden elastischen Dichtung zusätzliche Vorzüge bei der Abdichtung der Kavität, insbesondere dann, wenn die zwischen die Blasformhälften zu verbringenden extrudierten Vorformlinge nicht vollständig am Umfang der Dichtränder anliegen bzw. die Dichtränder nicht vollständig überlappen. Dies kann auch zweckmäßig sein, wenn die extrudierten bahnförmigen, flächigen Vorformlinge in ihren Randbereichen in der Materialdicke variieren. Ein elastisches Dichtmittel gleicht solche Materialstärkevariationen in vorteilhafter Art und Weise aus.

Bei einer besonders zweckmäßigen Ausgestaltung des Blasformwerkzeugs gemäß der Erfindung ist vorgesehen, dass die Dichtung unter Ausnutzung deren Elastizität aktiv verformbar ist, vorzugsweise pneumatisch expandierbar (aufblasbar) ist. Wenn beim Schließen der Blasformhälften gegeneinander eine Verschweißung der ausformenden Schalen miteinander zu einem fertigen Hohlkörper unter Aufwendung entsprechender Schließkraft erzielt werden soll, ist es vorteilhaft, die Dichtung wieder zu kollabieren. Die erfindungsgemäße Vorrichtung ist so ausgebildet, dass die Schließkraft des Blasformwerkzeugs nach wie vor über entsprechende Schließkanten der Formeinsätze aufgebracht wird, die am fertigen Erzeugnis eine umlaufende, ggf. dreidimensionale Fügenaht erzeugen.

Zweckmäßigerweise sind die Werkzeughalter als im Wesentlichen geschlossene, vorzugsweise kastenförmige Einfassung der Formeinsätze ausgebildet, die wenigstens eine geschlossene Kammer zwischen einem Formeinsatz und einer Formaufspannplatte definieren. Zwischen den Formeinsätzen und den Werkzeughaltern werden jeweils Vakuumkammern/Hohlräume gebildet, über welche beispielsweise das Anlegen von Unterdruck an die Kavitäten der Formeinsätze möglich ist.

Die Werkzeughalter können seitliche Durchbrüche mit Abdichtfunktionen gegenüber dem Formeneinsatz aufweisen. Durch diese Durchbrüche können beispielsweise Energieleitungen (Wasser, Luft, Hydraulik, Elektrik) hindurchgeführt sein.

Bei einer besonders zweckmäßigen Ausgestaltung des Blasformwerkzeugs gemäß der Erfindung ist vorgesehen, dass die Dichtränder des Mittenwerkzeugs in oder gegen die Schließbewegung ein- oder ausfahrbar ausgebildet sind.

Sind beispielsweise in dem Mittenwerkzeug Aufnahmen für Einbauteile angeordnet, kann durch die Ein- und Ausfahrbewegung der Dichtränder des Mittenwerkzeugs ein Hub-/Fügeweg erzeugt werden, der es ermöglicht, beispielsweise beim Schließen der Blasformhälften unter gleichzeitigem Einfahren der Dichtränder, die auf den Aufnehmern angeordneten Einbauteile an die in den Kavitäten der Blasformwerkzeuge vorgesehenen Schalen zu fügen.

Die der Erfindung zugrunde liegende Aufgabe wird weiterhin gelöst durch ein Verfahren zur Herstellung extrusionsblasgeformter Kunststoffartikel unter Verwendung eines Blasformwerkzeugs, umfassend wenigstens ein Schließgestell mit Formaufspanneinrichtungen sowie mit wenigstens zwei Blasformhälften, unter Verwendung des Blasformwerkzeugs der vorstehend beschriebenen Art, wobei das Verfahren die Extrusion wenigstens eines Vorformlings aus thermoplastischem Kunststoff, das Ausformen von wenigstens zwei Zwischenerzeugnissen in Form von Schalen, sowie das Verbinden der Schalen zu einem im Wesentlichen geschlossenen Hohlkörper mit einer dreidimensional umlaufenden Naht umfasst, wobei die Schalen jeweils mit einem umlaufenden Kragen ausgeformt werden, der sich außerhalb der Naht über den Umfang des Artikels im Wesentlichen ausschließlich in einer Ebene erstreckt.

Unter einer dreidimensional umlaufenden Naht des Kunststoffartikels bzw. Hohlkörpers im Sinne der Erfindung ist zu verstehen, dass die eigentliche Fügenaht der Behälterhalbschalen nicht ausschließlich in einer Ebene verläuft, entsprechend der komplexen Gestaltung des Hohlkörpers, beispielsweise als Kraftstoffbehälter. Die umlaufenden Kragen der Halbschalen, die miteinander verschweißt werden, sind jedoch im Gegensatz hierzu in einer Ebene umlaufend ausgebildet, was der verhältnismäßig einfachen Gestaltung des Blasformwerkzeugs gemäß der Erfindung Rechnung trägt.

Bei einer vorteilhaften Variante des Verfahrens gemäß der Erfindung ist vorgesehen, dass bei der Ausformung der Schalen die Kavitäten des Blasformwerkzeugs im Bereich des umlaufenden Kragens bzw. außerhalb der Naht abgedichtet werden.

Ein etwa an dem fertigen Artikel vorgesehener umlaufender Kragen kann je nach Anwendung, beispielsweise bei Herstellung von Kraftstoffbehältern, nach der Entnahme aus dem Blasformwerkzeug durch entsprechende Nacharbeit entfernt werden. Werden beispielsweise mit dem Verfahren gemäß der Erfindung unter Verwendung des Blasformwerkzeugs gemäß der Erfindung Kraftstoffbehälter aus thermoplastischem Kunststoff hergestellt, so eignen sich diese hervorragend für eine Kleinserienfertigung oder gar für die Prototypen-/Musterherstellung.

Eine Variante des Verfahrens zeichnet sich durch das Fügen von Einbauteilen an einander zugekehrten Wandungen der Schalen vor dem Verschweißen aus.

Das Fügen der Einbauteile kann beispielsweise unter Ausnutzung der Schließbewegung des Schließgestells erfolgen, insbesondere dann, wenn ein Blasformwerkzeug Anwendung findet, bei welchem die Dichtränder des Mittenwerkzeugs in oder gegen die Schließbewegung des Schließgestells ein- oder ausfahrbar ausgebildet sind.

Die Erfindung wird nachstehend anhand eines in den Zeichnungen dargestellten Ausführungsbeispiels erläutert.

Es zeigen:
- Figur 1: einen Querschnitt durch ein Blasformwerkzeug gemäß der Erfindung, schematisiert und stark vereinfacht,
- Figur 2: eine der Figur 1 entsprechende Ansicht mit zwischen den Blasformhälften und einem Mittenwerkzeug eingespannten Vorformlingen,
- Figur 3: eine den Figuren 1 und 2 entsprechende Ansicht des Blasformwerkzeugs beim Ausformen der Schalen des zu fertigenden Artikels,
- Figur 4: den fertigen Artikel im Blasformwerkzeug,
- Figur 5: die Entnahme des fertigen Artikels aus dem Blasformwerkzeug,

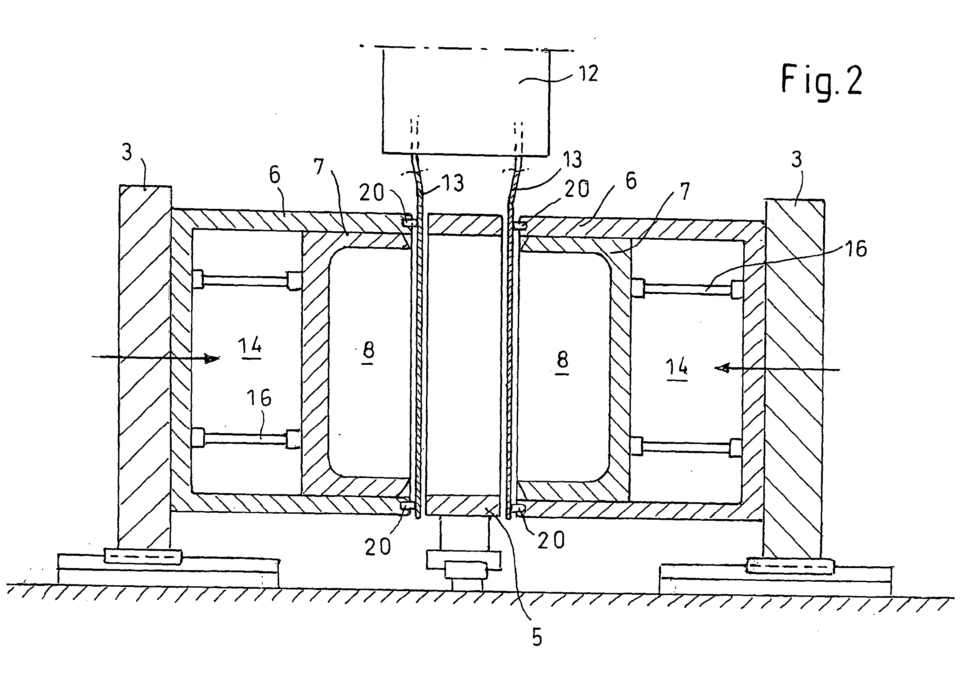

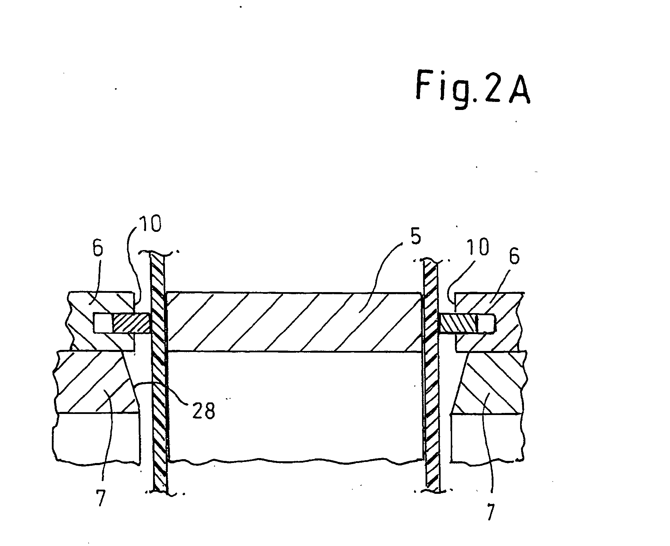

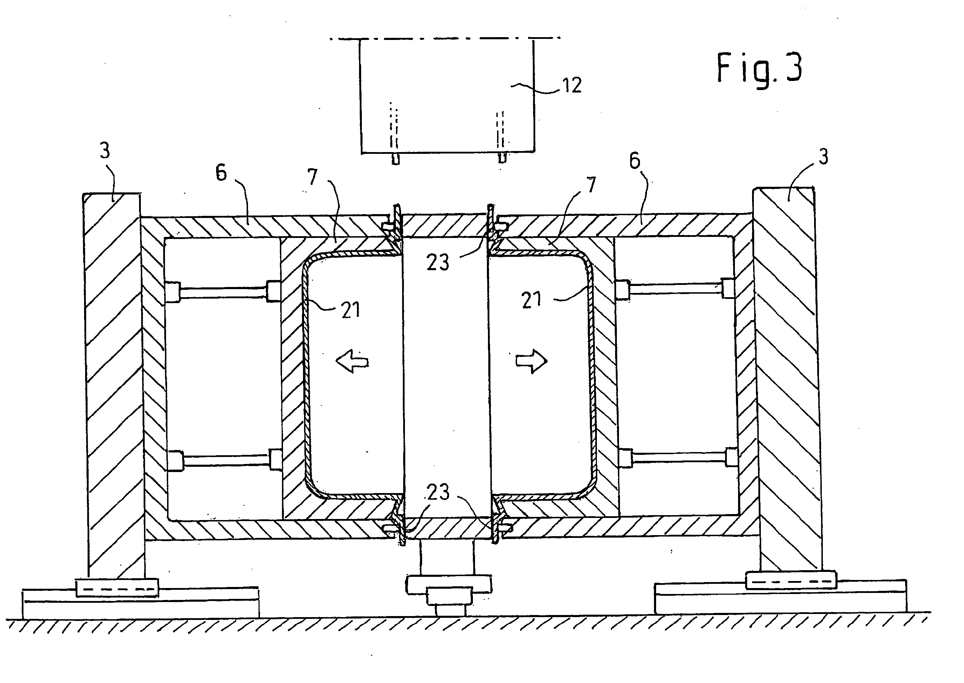

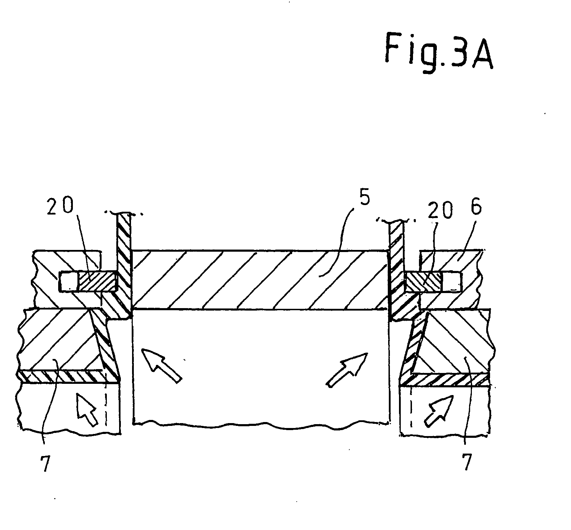

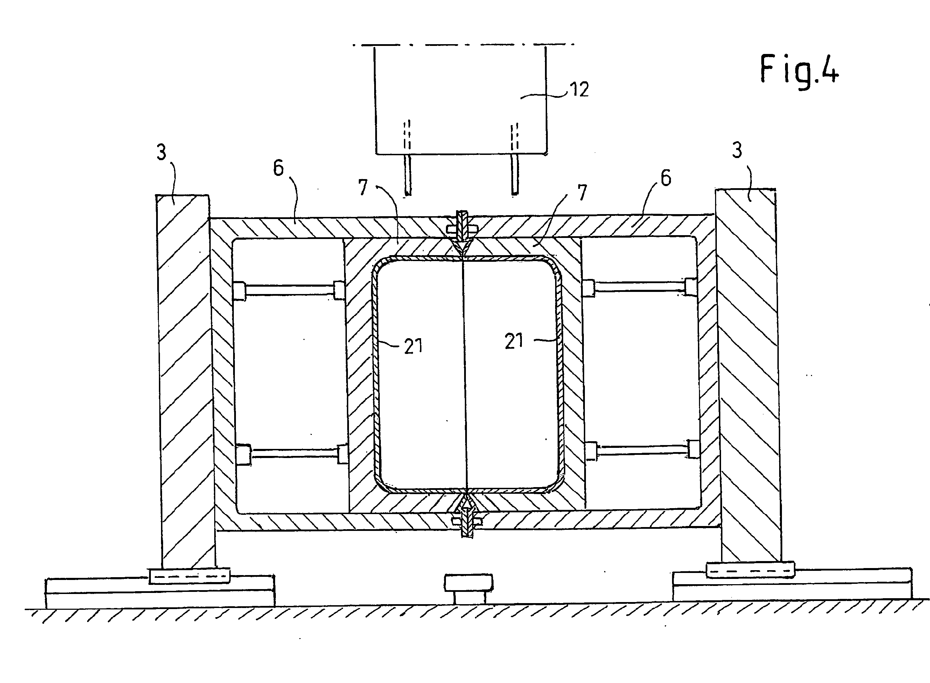

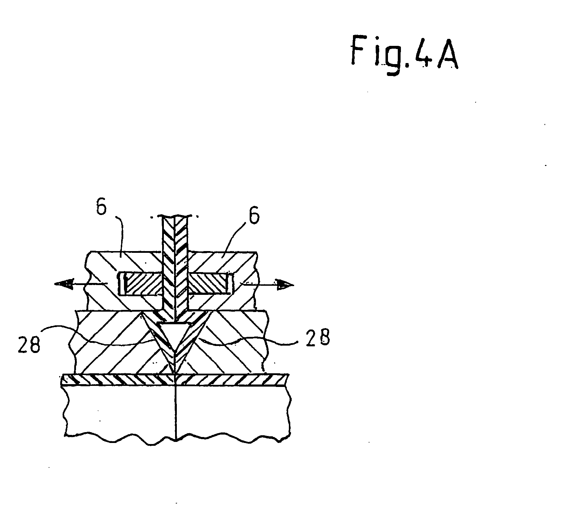

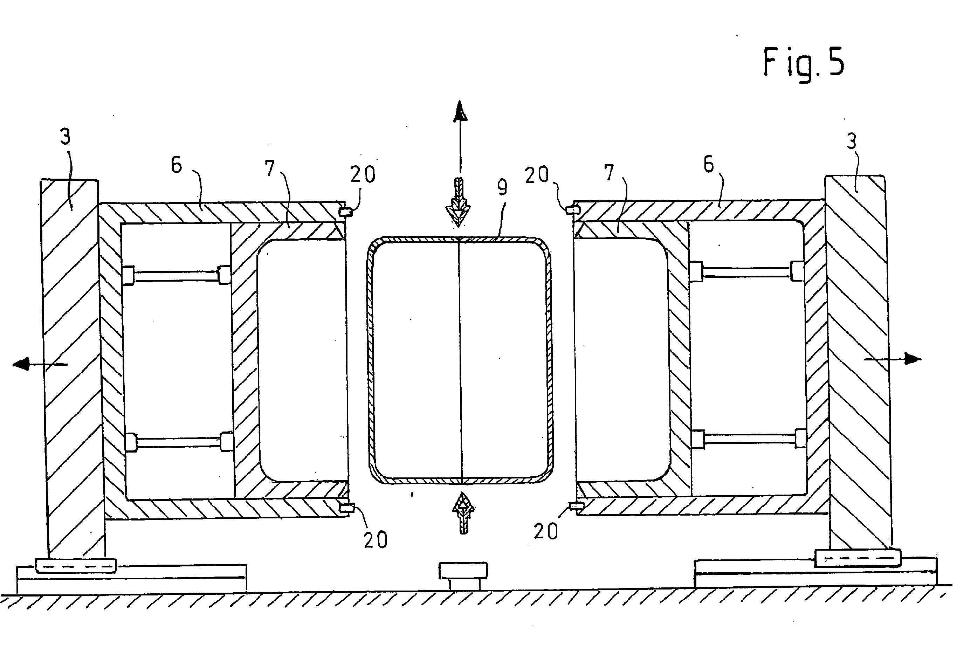

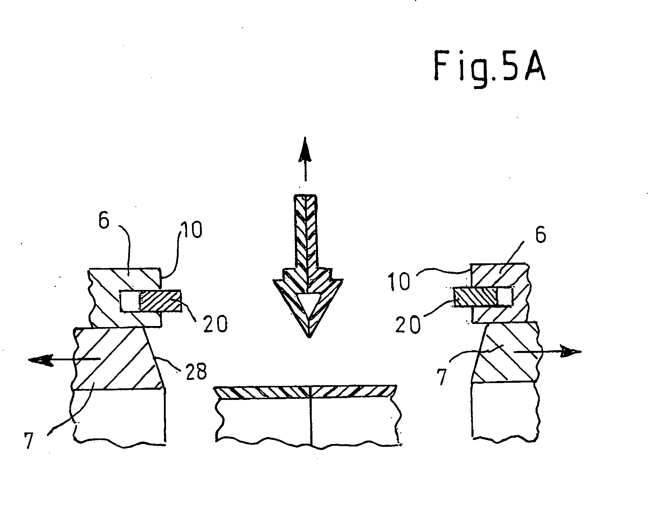

- Figuren 2a, 3a, 4a, 5a: jeweils vergrößerte Ansichten der Dichtränder der Werkzeughalter sowie der Schließkanten der Formeinsätze, wobei die Figuren 2a und 3a die Abdichtung des Formnests des Blasformwerkzeugs während eines anfänglichen Schließens veranschaulichen und die Figuren 4a und 5a das Schließen des Blasformwerkzeugs zwecks Verschweißen der Schalen miteinander veranschaulichen,

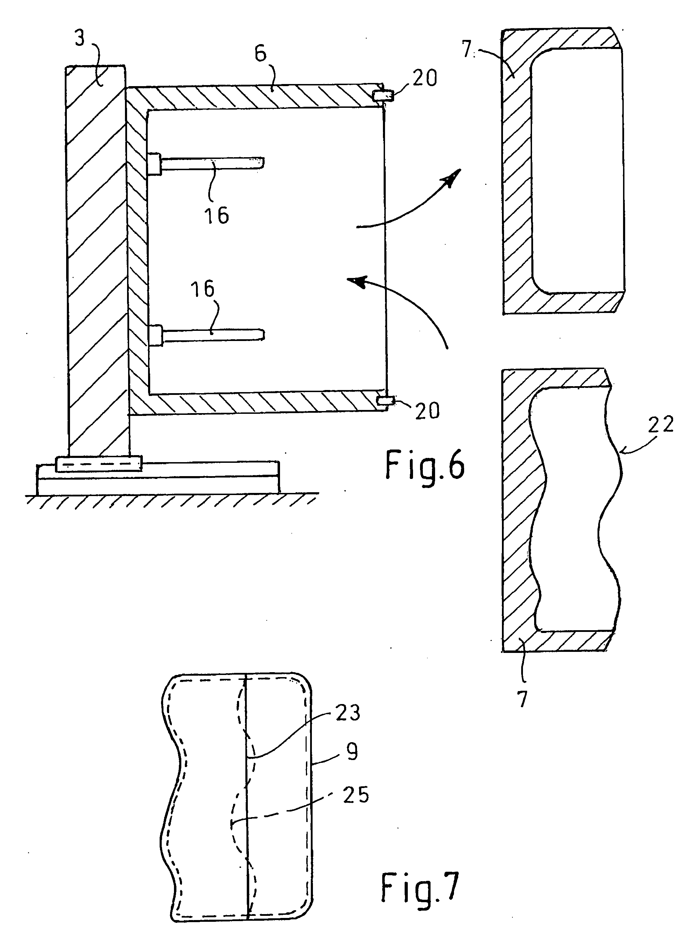

- Figur 6: eine schematische Darstellung einer Formaufspannplatte mit darauf angeordnetem Werkzeughalter und zwei auswechselbaren Formeinsätzen,
- Figur 7: eine schematische Seitenansicht des zu fertigenden Artikels in Form eines Kraftstoffbehälters,

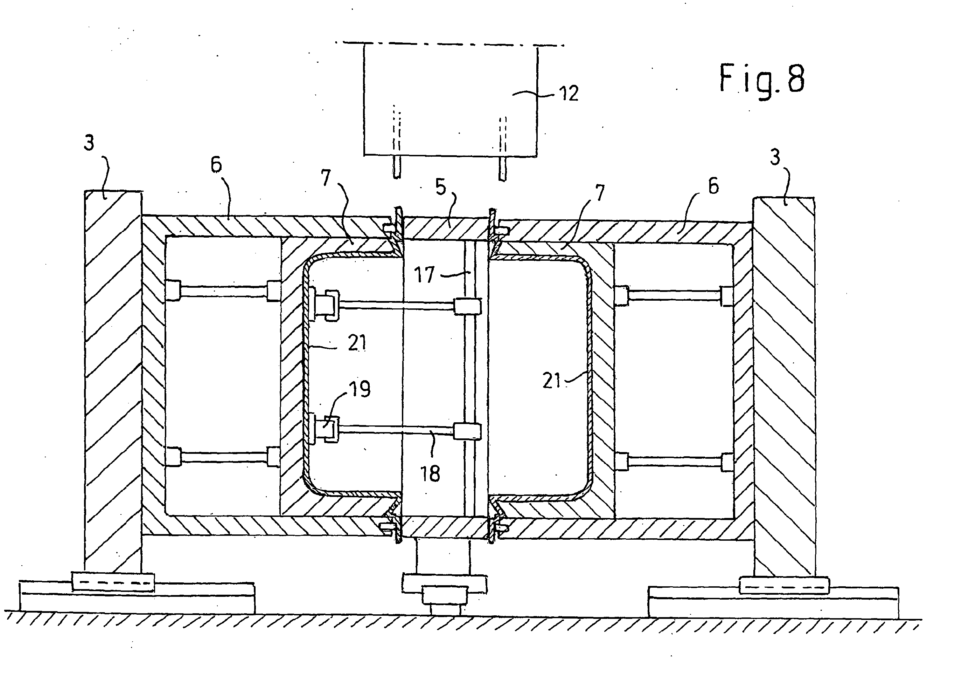

- Figur 8: eine schematische Ansicht des Blasformwerkzeugs gemäß der Erfindung während des Fügens von Einbauteilen an die Innenwandung des zu fertigenden Artikels,

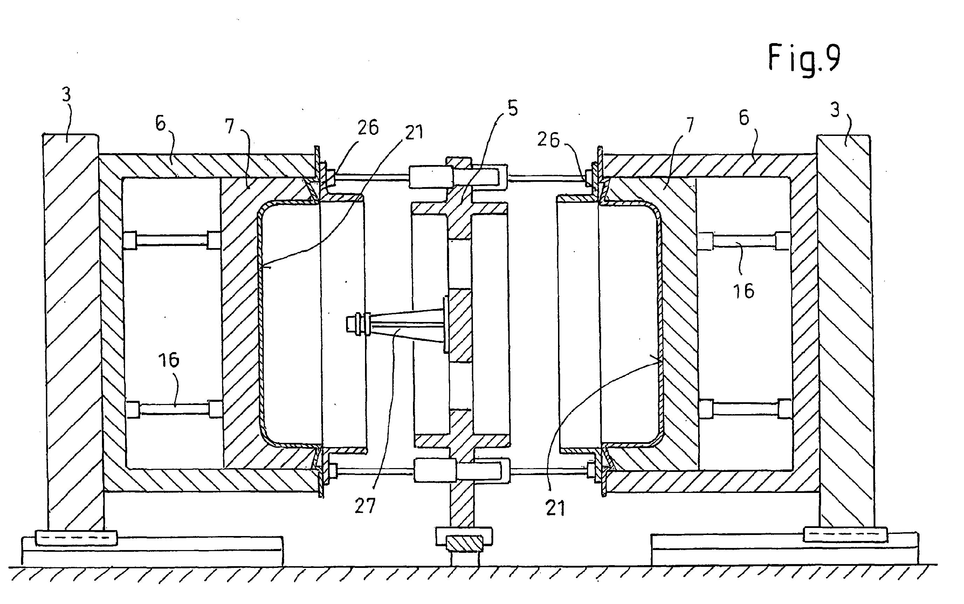

- Figur 9: einen Querschnitt durch das Blasformwerkzeug der Erfindung, wobei das Mittenwerkzeug mit ein- und ausfahrbaren voreilenden Dichtkanten versehen ist, und

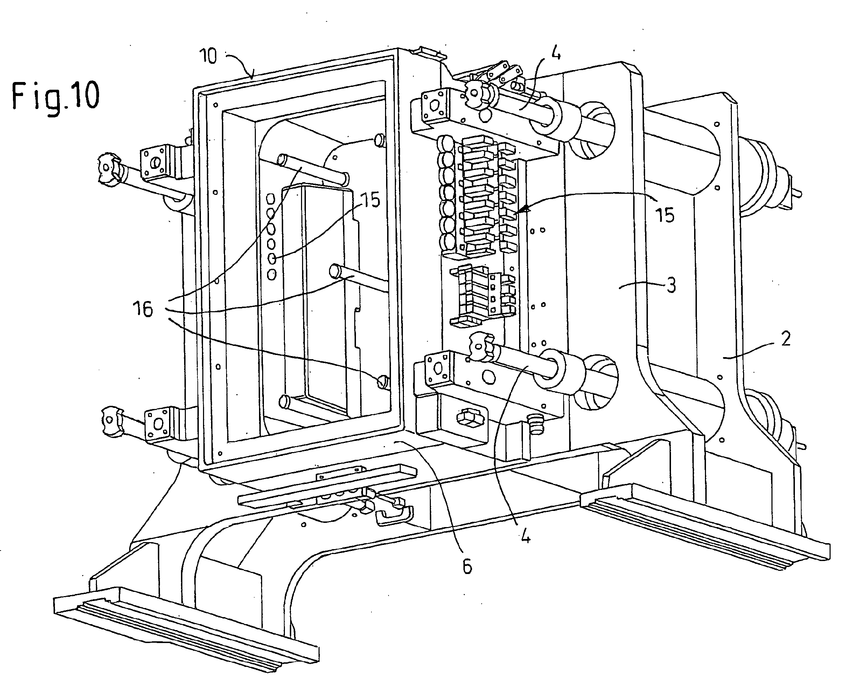

- Figur 10: eine perspektivische Ansicht einer Hälfte des Blasformwerkzeugs gemäß der Erfindung ohne Formeinsatz.

Das Blasformwerkzeug 1 gemäß der Erfindung umfasst ein Schließgestell 2 mit zwei Formaufspannplatten 3 sowie den üblichen Verriegelungseinrichtungen 4 und einen mit 5 bezeichneten Mittenrahmen als Mittenwerkzeug.

Auf den Formaufspannplatten 3 ist jeweils ein Werkzeughalter 6 mit einem von diesem aufgenommenen Formeinsatz 7 angeordnet. Die Formeinsätze 7 bilden jeweils eine Kavität 8 für die Ausformung eines Kunststoffhohlkörpers in Form eines Kraftstoffbehälters 9.

Die Werkzeughalter 6 sind jeweils als kastenförmige Aufnahmen für die Formeinsätze 7 ausgebildet. Der Mittenrahmen 5 ist ebenfalls als kastenförmiger Rahmen ausgebildet. Die Werkzeughalter 6 bilden jeweils einen umlaufenden Dichtrand 10, der mit einer Dichtkante 11 des Mittenrahmens 5, wie nachstehend noch zu beschrieben, zusammenwirkt.

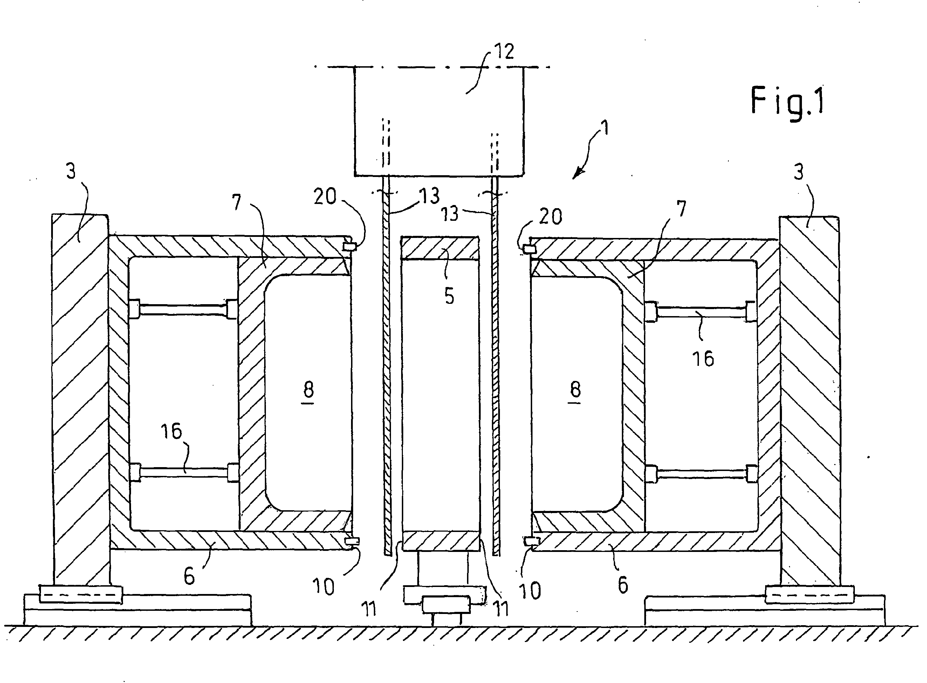

Mit 12 ist ein über dem Blasformwerkzeug 1 angeordneter Extrusionskopf bezeichnet, an welchem nicht dargestellte Extruder zum Plastifizieren von thermoplastischem Kunststoff angeschlossen sind. Aus dem Extrusionskopf 12 werden über Breitschlitzdüsen zwei flächige/bahnförmige Vorformlinge 13 in Schwerkraftrichtung kontinuierlich extrudiert. Diese werden in das geöffnete Blasformwerkzeug 1, wie beispielsweise in Figur 1 dargestellt, jeweils zwischen die geöffneten Werkzeughalter 6 und den Mittenrahmen 5 extrudiert. Das Blasformwerkzeug 1 ist bezüglich des Extrusionskopfes 12 verfahrbar angeordnet. Alternativ ist es möglich, die Vorformlinge 13 an einem anderen Ort zu extrudieren und mittels Manipulatoren zwischen die geöffneten Teile des Blasformwerkzeugs 1 zu verbringen. Die Vorformlinge bestehen beispielsweise aus einem mehrschichtigen Extrudat auf der Basis von HDPE mit wenigstens einer inneren Barriereschicht aus EVOH oder auf Polyamid-Basis.

Bei dem beschriebenen Ausführungsbeispiel ist das Schließgestell 2 bezüglich des Extrusionskopfes 12 verfahrbar. Über das Schließgestell 2 sind die Formaufspannplatten 3 und mit diesen die Werkzeughalter 6 und die in diesen angeordneten Formeneinsätze 7 aufeinander zu und voneinander weg im Sinne einer Schließbewegung verfahrbar. Der Mittenrahmen 5 ist quer zu dieser von den Formaufspannplatten 3 vollzogenen Schließ- und Öffnungsbewegung in die Zeichnungsebene hinein und aus dieser heraus verfahrbar.

Die Formeneinsätze 7, die jeweils wenigstens eine Kavität 8 zur Ausformung des Artikels bilden, sind jeweils herausnehmbar in die Werkzeughalter 6 so eingesetzt, dass hinter diesen jeweils in den Werkzeughaltern 6 eine Vakuumkammer 14 gebildet wird, die sowohl evakuierbar ist als auch zur Aufnahme von elektrischen und hydraulischen Leitungen dienen kann. Innerhalb dieser Vakuumkammer 14 verlaufen alle Energieversorgungsleitungen, d. h. Wasser, Luft, Hydraulik, Pneumatik und Kabel für elektrische Signale.

Wie dies der Figur 10 zu entnehmen ist, sind seitlich an dem Werkzeughalter 6 Durchbrüche 15 vorgesehen, in welcher Hindurchführungen für die Energieversorgung, für Hydraulik/Elektrik und Pneumatik dichtend eingesetzt sind.

An den Werkzeughaltern 6 sind insbesondere nicht näher beschriebene Vakuumverteiler angeordnet, mit denen die gesamte Vakuumkammer 14 evakuierbar ist, so dass über entsprechende Vakuumbohrungen und Vakuumkanäle an den Formeneinsätzen 7 die Kavitäten 8 evakuierbar sind.

Die Formeneinsätze 7 sind in den Vakuumkammern auf Stützelementen 16 gelagert.

Sowohl die umlaufenden Dichtränder 10 der Werkzeughalter 6 als auch die Dichtränder 11 des Mittenrahmens 5 verlaufen ausschließlich in einer einzigen Ebene und besitzen daher im Sinne der Erfindung einen zweidimensionalen Verlauf. Die Werkzeughalter 6 sind im Wesentlichen kastenförmig ausgebildet, der Mittenrahmen 5 ist zur Anlage gegen die Werkzeughalter 6 entsprechend kastenförmig ausgebildet. Die Formeinsätze 7 besitzen jeweils eine umlaufende Schließkante 28, welche jeweils mehr oder weniger über die Dichtränder 10 der Werkzeughalter 6 hervorstehen bzw. hervorspringen, was bei der Abdichtung der Werkzeughalter 6 gegen den Mittenrahmen 5 insoweit kein Problem darstellt, als dass die Schließkanten 28 der Formeinsätze 7 mehr oder weniger in den Mittenrahmen 5 eintauchen können. Die Schließkanten 28 definieren eine dreidimensionale Fügekante, die den Verlauf der Naht 25 am fertigen Artikel definieren.

In dem Mittenrahmen 5 ist, wie dies beispielsweise schematisch in Figur 8 dargestellt ist, wenigstens ein artikelspezifischer Komponententräger 17 angeordnet, welcher bei der in Figur 8 dargestellten Variante des Blasformwerkzeugs 1 gemäß der Erfindung pneumatische Fügezylinder 18 aufweist, mit welchen Einbauteile 19 an die Innenwandung des zu fertigenden Artikels gefügt werden können, wie dies nachstehend noch beschrieben wird.

Die Funktions- und Arbeitsweise des Blasformwerkzeugs 1 gemäß der Erfindung ist nun im Wesentlichen wie folgt:

Wie bereits in Figur 1 andeutungsweise dargestellt, werden zunächst die Vorformlinge 13 zwischen die geöffneten Teile des Blasformwerkzeugs so verbracht, dass sich diese über ihre gesamte Länge zwischen den geöffneten Werkzeughaltern 6 und dem Mittenrahmen 5 erstrecken. Sodann wird das Blasformwerkzeug 1 geschlossen, d. h. die Formaufspannplatten 3 mit den auf diesen befindlichen Werkzeughaltern 6 werden gegen den Mittenrahmen 5 geschlossen, wobei die Dichtränder 10 der Werkzeughalter 6 gegen die Dichtränder 11 auf beiden Seiten des Mittenrahmens 5 zur Anlage gelangen. Die Dichtränder 10, 11 sowohl des Werkzeughalters als auch des Mittenrahmens können mit einer umlaufenden aufblasbaren elastischen Dichtung 20 versehen sein, die eine Abdichtung des geschlossenen Blasformwerkzeugs 1 erzeugt, für den Fall, dass die Vorformlinge 13 nicht vollständig an den umlaufenden Dichträndern 10, 11 anliegen bzw. diesen nicht vollständig überlappen.

Das geschlossene Blasformwerkzeug 1 ist in Figur 2 dargestellt. Beim Schließen des Blasformwerkzeugs 1 werden die Vorformlinge 13 unterhalb des Extrusionskopfes 12 abgequetscht. Zusätzlich oder alternativ kann vorgesehen sein, die Vorformlinge 13 unterhalb des Extrusionskopfes 12 mittels eines Werkzeugs, beispielsweise eines Heißmessers oder dergleichen, zu trennen.

Sodann werden die Vorformlinge 13 innerhalb des geschlossenen Blasformwerkzeugs 1 unter Anlegung von Unterdruck über die Formeneinsätze 7 in die Kavitäten 8 eingezogen, wie dies in Figur 3 dargestellt ist. Eine Evakuierung der Formeinsätze 7 erfolgt über die Vakuumkammern 14 hinter den Formeinsätzen 7. Dabei werden die Vorformlinge 13 zu zwei Schalen 21 ausgeformt und gleichzeitig oder in einem weiteren Verfahrensschritt mit Einbauteilen 19 versehen.

Die Abdichtung des Bläsformwerkzeugs 1 erfolgt anders als bisher über die Werkzeuge selbst, d. h. über die Werkzeughalter 6 und den Mittenrahmen 5 mit der Folge, dass ein zweidimensional umlaufender Dichtrand erzeugt wird. Die Formeneinsätze 7 können abweichend von der durch die Werkzeughalter und den Mittenrahmen 5 vorgesehene Kontur eine dreidimensionale Fügekante 22 für die Schalen 21 vorgeben, wie dies beispielsweise in den Figuren 6 und 7 andeutungsweise dargestellt ist.

Gemäß einer Variante des Verfahrens gemäß der Erfindung kann vorgesehen sein, das Blasformwerkzeug unmittelbar nach Ausformung der Schalen 21 wieder zu öffnen und den Mittenrahmen 5 zwischen den Werkzeughaltern 6 und den Formeneinsätzen 7 zu entfernen, d. h. in die Zeichnungsebene hinein oder aus dieser heraus zu verfahren. In das so geöffnete Formnest können dann beispielsweise Einbauteile 19 an die zugängliche Innenwandung der Schalen 21 gefügt werden. Die Schalen 21 befinden sich zu diesem Zeitpunkt noch im schmelzeheißen Zustand, so dass beispielsweise Einbauteile 19 mit den einander zugekehrten Innenwandungen bzw. Innenseiten der Schalen 21 verschweißt werden können.

Bei einer anderen Variante des Verfahrens kann vorgesehen sein, in dem Mittenrahmen 5 einen oder mehrere Komponententräger vorzusehen, der mit Fügezylindern 18 bestückt ist, wie dies in Figur 8 dargestellt ist. Bei dieser Variante des Verfahrens werden unmittelbar nach der Ausformung der Schalen 21 die mit Einbauteilen bestückten Fügezylinder 18 ausgefahren und die Einbauteile 19 an die Innenwandungen der Schalen 21 verbracht bzw. dort angefügt, beispielsweise durch Nieten, Schweißen oder dergleichen.

Sodann werden die Fügezylinder 18 eingefahren und das Blasformwerkzeug 1 wird geöffnet. In einem letzten Schritt, der bei beiden Verfahrensvarianten identisch ist, werden die Blasformhälften des Blasformwerkzeugs 1 bzw. die Formaufspannplatten 3 aufeinander zu gefahren. Das Blasformwerkzeug 1 wird geschlossen, so dass die flanschartig umlaufenden Kragen 23 der Schalen 21 ggf. über die Dichtränder 10 der Werkzeughalter 6 miteinander in Kontakt gebracht werden und ggf. teilweise miteinander verschweißt werden. Sofern die Dichtränder 10 mit einer umlaufenden elastischen Dichtung 20 versehen sind, kann vorher eine Belüftung der elastischen Dichtung 20 vorgenommen worden sein. Das Fügen bzw. Verschließen der Schalen 21 zu dem fertigen Hohlkörper/Artikel erfolgt über Zusammenfahren der Schließkanten 28 der Formeinsätze beim Schließen des Blasformwerkzeugs.

Der fertige aus dem Blasformwerkzeug 1 entnommene Artikel in Form eines Kraftstoffbehälters 9 (siehe Figur 5) wird sodann aus dem unter dem Extrusionskopf 12 weggefahrenen Blasformwerkzeug 1 nach oben entnommen.

Figur 7 veranschaulicht beispielsweise die Ausgestaltung des fertigen Kraftstoffbehälters 9, welcher einen etwa zweidimensional verlaufenden umlaufenden Kragen 23 und eine durch die Formeinsätze 7 vorgegebene dreidimensional umlaufende Naht 25 aufweist.

Bei der in Figur 9 dargestellten Variante des Blasformwerkzeugs 1 gemäß der Erfindung ist der Mittenrahmen umlaufend mit jeweils ein- und ausfahrbaren Rahmen 26 versehen, die jeweils ein- und ausfahrbare Dichtränder 11 bilden. Innerhalb des Mittenrahmens 5 sind starre Fügeeinheiten 27 vorgesehen, die jeweils mit Einbauteilen 19 bestückt werden. Die Anzahl und Anordnung der Fügeeinheiten 27 ist entsprechend der späteren Lage der Einbauteile 19 in den Schalen 21 beschaffen.

Die Werkzeughalter 6 werden zunächst gegen die ausgefahrenen Rahmen 26 geschlossen. Sodann werden die Vorformlinge 13 durch Anwendung von Unterdruck an die Kavitäten 8 angelegt. In einem nächsten Schritt werden die Rahmen 26 eingefahren und die Werkzeughalter 6 um den entsprechenden Weg geschlossen, so dass die Einbauteile 19 durch die so erzeugte Hubbewegung an die Schalen 21 gefügt werden. Die Rahmen 26 können auch passiv über die Schließbewegung des Werkzeugs eingefahren werden. Anschließend kann das Blasformwerkzeug 1 geöffnet werden, der Mittenrahmen 5 wird quer zur Schließbewegung aus dem Blasformwerkzeug 1 herausgefahren, sodann kann das Blasformwerkzeug 1 wieder geschlossen werden.

### Bezugszeichenliste

- 1: Blasformwerkzeug
- 2: Schließgestell
- 3: Formaufspannplatten
- 4: Verriegelungseinrichtungen
- 5: Mittenrahmen
- 6: Werkzeughalter
- 7: Formeinsatz
- 8: Kavität
- 9: Kraftstoffbehälter
- 10: Dichtrand
- 11: Dichtrand
- 12: Extrusionskopf
- 13: Vorformlinge
- 14: Vakuumkammern
- 15: Durchbrüche
- 16: Stützelemente
- 17: Komponententräger
- 18: Fügezylinder
- 19: Einbauteile
- 20: Elastische Dichtung
- 21: Schalen
- 22: Fügekante
- 23: Kragen
- 25: Naht
- 26: Rahmen
- 27: Fügeeinheiten
- 28: Schließkante

## Patentansprüche

1. Blasformwerkzeug (1) zur Herstellung eines Kunststoffartikels, umfassend wenigstens ein Schließgestell (2) mit Formaufspanneinrichtungen (3) sowie mindestens zwei Blasformhälften, die über eine Öffnungs- und Schließbewegung des Schließgestells (2) aufeinander zu und voneinander weg verfahrbar ausgebildet sind, und die jeweils wenigstens eine Kavität (8) zur Ausformung des Kunststoffartikels aufweisen, wobei die Formaufspanneinrichtungen (3) jeweils wenigstens einen Werkzeughalter (6) aufweisen, in welchen jeweils ein Formeinsatz (7) auswechselbar eingesetzt ist, und die Werkzeughalter jeweils einen umlaufenden Dichtrand (10) bilden, **gekennzeichnet durch** wenigstens ein Mittenwerkzeug (5), welches quer zu der Öffnung- und Schließbewegung der Blasformhälften verfahrbar ist und welches mit den Dichträndern (10) der Werkzeughalter (6) abdichtend in Anlage bringbar ist, wodurch ein Ausformen von wenigstens zwei Zwischenerzeugnissen in Form von Schalen möglich ist und wobei die Formeinsätze über entsprechende Schließkanten/Quetschkanten verfügen, die ein Verschweißen der Schalen miteinander zu einem fertigen Hohlkörper bei einem weiteren Schließen der Werkzeuge ermöglichen.

2. Blasformwerkzeug nach Anspruch 1, **dadurch gekennzeichnet, dass** die Dichtränder (10) der Werkzeughalter (6) sich ausschließlich in einer sich zu der Schließbewegung senkrechten Ebene erstrecken.

3. Blasformwerkzeug nach einem der Ansprüche 1 oder 2, **dadurch gekennzeichnet, dass** das Mittenwerkzeug (5) wenigstens zwei sich jeweils in einer Ebene erstreckende umlaufende Dichtränder (11) aufweist, die mit den Dichträndern (10) der Werkzeughalter (6) zusammenwirken.

4. Blasformwerkzeug nach Anspruch 2, **dadurch gekennzeichnet, dass** das Mittenwerkzeug (5) als kastenförmiger Rahmen ausgebildet ist, welcher vorzugsweise wenigstens einen Komponententräger (17) umfasst.

5. Blasformwerkzeug nach einem der Ansprüche 1 bis4, **dadurch gekennzeichnet, dass** die Werkzeughalter (6) und/oder das Mittenwerkzeug (5) jeweils eine umlaufende, elastische Dichtung (20) aufweisen.

6. Blasformwerkzeug nach Anspruch5, **dadurch gekennzeichnet, dass** die Dichtung unter Ausnutzung deren Elastizität aktiv verformbar ist, vorzugsweise pneumatisch expandierbar ist.

7. Blasformwerkzeug nach einem der Ansprüche 1 bis6, **dadurch gekennzeichnet, dass** die Werkzeughalter (6) als im Wesentlichen geschlossene, vorzugsweise kastenförmige Einfassung der Formeinsätze (7) ausgebildet sind, die vorzugsweise wenigstens eine geschlossene Kammer hinter jedem Formeinsatz bilden.

8. Blasformwerkzeug nach einem der Ansprüche 1 bis 7, **dadurch gekennzeichnet, dass** die Dichtränder (11) des Mittenwerkzeugs (5) in oder gegen die Schließbewegung ein- oder ausfahrbar ausgebildet sind.

9. Verfahren zur Herstellung extrusionsblasgeformter Kunststoffartikel unter Verwendung eines Blasformwerkzeugs (1), umfassend wenigstens ein Schließgestell (2) mit Formaufspanneinrichtungen (3) sowie wenigstens zwei Blasformhälften, unter Verwendung eines Blasformwerkzeugs (1) nach einem der Ansprüche 1 bis8, umfassend die Extrusion wenigstens eines Vorformlings (13) aus thermoplastischem Kunststoff, das Ausformen von wenigstens zwei Zwischenerzeugnissen in Form von Schalen (21) sowie das Verbinden der Schalen zu einem im Wesentlichen geschlossenen Hohlkörper mit einer vorzugsweise dreidimensional umlaufenden Naht (25), wobei die Schalen (21) jeweils mit einem umlaufenden Kragen (23) ausgeformt werden, der sich außerhalb der Naht (25) über den Umfang des Artikels im Wesentlichen ausschließlich in einer Ebene erstreckt.

10. Verfahren nach Anspruch9, **dadurch gekennzeichnet, dass** bei der Ausformung der Schalen die Kavitäten des Blasformwerkzeugs im Bereich des umlaufenden Kragens (23) bzw. außerhalb der Naht (25) abgedichtet werden.

11. Verfahren nach Anspruch 10, **gekennzeichnet durch** das Fügen von Einbauteilen (19) an die einander zugekehrten Wandungen der Schalen (21) vor einem Verschweißen der Schalen.

12. Verfahren nach Anspruch 10 oder11, **dadurch gekennzeichnet, dass** das Fügen der Einbauteile (19) unter Ausnutzung der Schließbewegung des Schließgestells (2) erfolgt.

## Claims

1. Blow moulding tool (1) for manufacture of a plastic article, comprising at least one closing frame (2) with mould clamping devices (3) and at least two blow mould halves, which are configured to travel towards and away from each other in an opening and closing movement of the closing frame (2), and each having at least one cavity (8) for moulding the plastic article, wherein the mould clamping devices (3) each have at least one tool holder (6), in each of which a mould insert (7) is interchangeably mounted, and which tool holders respectively form a peripheral sealing edge (10), **characterised by** at least one centre tool (5), which can travel transverse to the opening and closing movement of the blow mould halves and which can be disposed into sealing abutment with the sealing edges (10) of the tool holder (6), whereby it is possible to mould at least two intermediate products in the form of shells and wherein the mould inserts have corresponding closing edges/crushing edges, which enable the shells to weld to each other to produce a finished hollow body with a further closing tool.

2. Blow moulding tool in accordance with claim 1, **characterised in that** the sealing edges (10) of the tool holder (6) extend solely in a plane perpendicular to the closing movement.

3. Blow moulding tool in accordance with one of the claims 1 and 2, **characterised in that** the centre tool (5) has at least two peripheral sealing edges (11) extending in one plane, which cooperate with the sealing edges (10) of the tool holder (6).

4. Blow moulding tool in accordance with claim 2, **characterised in that** the centre tool (5) is configured as a box-like frame, which preferably comprises a component carrier (17).

5. Blow moulding tool in accordance with one of the claims 1 to 4, **characterised in that** the tool holder (6) and/or the centre tool (5) respectively have a peripheral, elastic seal (20).

6. Blow moulding tool in accordance with claim 5, **characterised in that** the seal is actively deformable by utilisation of its elasticity, preferably is pneumatically expandable.

7. Blow moulding tool in accordance with one of the claims 1 to 6, **characterised in that** the tool holder (6) is configured essentially as a closed, preferably box shape surround to the mould inserts (7), which preferably form at least one closed chamber behind each mould insert.

8. Blow moulding tool in accordance with one of the claims 1 to 6, **characterised in that** the sealing edges (11) of the centre tool (5) are designed to be extendable or retractable against the closing movement.

9. Method for manufacture of extrusion blow-moulded plastic articles using a blow moulding tool (1), comprising at least one closing frame (2) with mould clamping devices (3) and at least two mould halves, using a blow moulding tool (1) in accordance with one of the claims 1 to 8, comprising the extrusion of at least one preform (13) of thermoplastic plastic, the forming of at least two intermediate products in the form of shells (21) and the joining of the shells to produce an essentially closed hollow body with a preferably three-dimensional seam (25), wherein the shells (21) are each moulded with a peripheral collar (23), which extends outside the seam (25) beyond the periphery of the article, essentially solely in one plane.

10. Method in accordance with claim 9, **characterised in that**, during the forming of the shells, the cavities of the blow moulding tool are sealed in the area of the peripheral collar (23) or outside the seam (25).

11. Method in accordance with claim 10, **characterised by** the joining of the insert components (19) to the die walls of the shells (21) facing each other before the shells are welded together.

12. Method in accordance with claim 10 or 11, **characterised in that** the joining of the insert components (19) is carried out utilising the closing movement of the closing frame (2).

## Revendications

1. Moule de soufflage (1) destiné à la réalisation d'un produit en matière plastique, comportant au moins un châssis de fermeture (2) avec des dispositifs de fixation du moule (3), ainsi qu'au moins deux demi-moules, qui sont configurés de manière mobile pour s'approcher ou s'écarter l'un de l'autre sous l'effet du mouvement d'ouverture et de fermeture du châssis de fermeture (2), et qui comportent chacun au moins une empreinte (8) pour le moulage du produit en matière plastique, les dispositifs de fixation du moule (3) comportant chacun au moins un porte-moule (6), dans lequel est mis en place de manière amovible un insert de moule (7), et les porte-moule forment respectivement un bord d'étanchéité (10) périphérique, **caractérisé par** au moins un moule central (5), qui est mobile transversalement au mouvement d'ouverture et de fermeture des demi-moules et qui peut être amené en appui de manière étanche contre les bords d'étanchéité (10) des porte-moule (6), ce qui permet le moulage d'au moins deux produits intermédiaires en forme de coques et les inserts de moule comportant des bords de fermeture/bords de serrage appropriés qui permettent le soudage des coques l'une à l'autre pour obtenir un produit fini lors d'une prochaine fermeture du moule.

2. Moule de soufflage selon la revendication 1, **caractérisé en ce que** les bords d'étanchéité (10) des porte-moule (6) s'étendent exclusivement dans un plan perpendiculaire au mouvement de fermeture.

3. Moule de soufflage selon la revendication 1 ou 2, **caractérisé en ce que** le moule central (5) comporte au moins deux bords d'étanchéité (11) périphériques, qui s'étendent respectivement dans un plan et qui coopèrent avec les bords d'étanchéité (10) des porte-moule (6).

4. Moule de soufflage selon la revendication 2, **caractérisé en ce que** le moule central (5) est réalisé comme un cadre en forme de caisson, qui comporte, de préférence, au moins un support d'élément (17).

5. Moule de soufflage selon l'une quelconque des revendications 1 à 4, **caractérisé en ce que** les porte-moule (6) et/ou le moule central (5) comportent chacun un joint d'étanchéité (20) élastique périphérique.

6. Moule de soufflage selon la revendication 5, **caractérisé en ce que** le joint d'étanchéité est activement déformable moyennant l'exploitation de son élasticité, de préférence est pneumatiquement expansible.

7. Moule de soufflage selon l'une quelconque des revendications 1 à 6, **caractérisé en ce que** les porte-moule (6) sont réalisés comme un cadre sensiblement fermé, de préférence en forme de caisson, pour les inserts de moule (7), qui forment de préférence au moins une chambre fermée derrière chaque insert de moule.

8. Moule de soufflage selon l'une quelconque des revendications 1 à 7, **caractérisé en ce que** les bords d'étanchéité (11) du moule central (5) sont réalisés de manière à pouvoir rentrer ou sortir dans le sens du mouvement de fermeture ou dans le sens opposé à celui-ci.

9. Procédé permettant la réalisation d'un produit en matière plastique moyennant l'utilisation d'un moule de soufflage (1) comportant au moins un châssis de fermeture (2) avec des dispositifs de fixation du moule (3), ainsi qu'au moins deux demi-moules, moyennant l'utilisation d'un moule de soufflage (1) selon l'une quelconque des revendications 1 à 8, comportant l'extrusion d'au moins une paraison (13) en matière thermoplastique, le moulage d'au moins deux produits intermédiaires en forme de coques (21), ainsi que la liaison des coques pour obtenir un corps creux sensiblement fermé avec une ligne de joint (25) de préférence tridimensionnellement périphérique, lesdites coques (21) étant moulées chacune avec un col (23) périphérique qui s'étend sensiblement uniquement dans un plan, en-dehors de la ligne de joint (25) sur la périphérie du produit.

10. Procédé selon la revendication 9, **caractérisé en ce que** pendant le moulage des coques, les empreintes du moule de soufflage sont rendues étanches dans la zone du col (23) périphérique, plus précisément en-dehors de la ligne de joint (25).

11. Procédé selon la revendication 10, **caractérisé par** l'assemblage d'éléments incorporés (19) contre les parois, orientées l'une vers l'autre, des coques (21), avant un soudage des coques.

12. Procédé selon la revendication 10 ou 11, **caractérisé en ce que** l'assemblage des éléments incorporés (19) est réalisé en exploitant le mouvement de fermeture du châssis de fermeture (2).
